# EUROPEAN PATENT APPLICATION

(11) **EP 2 112 761 A2**
(43) Date of publication of application: **28.10.2009**
(21) Application number: 09075184.3
(22) Date of filing: 21.04.2009
(51) Int. Cl.: H02P 9/04

(54) **Power generation system**

(30) Priority: 21.04.2008 US 81786
(71) Applicant: Glacier Bay, Inc., Union City CA 94587 (US)
(72) Inventor: Alston, Gerald Allen, Union City, CA 94587 (US); Dobbs, Justin R., Union City, CA 94587 (US)
(74) Representative: Fischer, Uwe

(57) **Abstract**

A power generation system including an engine and an electrical generator driven to rotate at rotational speed by the engine. The generator is configured to supply an adjustable amount of required electrical power having a voltage and a current to at least one electrical load. The system also includes a controller configured to adjust at least one operating parameter of the engine in order to maximize efficiency of the system. The system efficiency is a measure of the combined operation of generator and engine and load for a given load condition. The controller is configured to maximize system efficiency based only upon the required electrical power being supplied by the generator. The controller is configured so that the controller does not independently consider any one of the rotational speed, the voltage or the current being supplied by the generator when adjusting the at least one operating parameter.

## Description

### BACKGROUND

The present application relates to a power generation system. The disclosed power generation system may include, for example, diesel generators for supplying various AC and DC loads.

Conventional power systems may include electrical generator sets. A generator set (or engine-generator set, genset, generator, etc.) is a combination of an electrical generator and an engine that may be mounted together to form a single piece of equipment or separate pieces of equipment electrically coupled together. Generator sets can produce direct current or alternating current and may be either single-phase or three-phase. Generator sets are often used in power generation systems to supply electrical power to systems where utility power may not be readily available or in situations where power is only needed temporarily. For example, generator sets may be used to supply power tools, mobile lighting, amusement rides, vehicle propulsion power electronics, marine propulsion power and electronics, etc. In a typical generator set system, when load is added to a power distribution bus the primer mover or engine speeds up to maintain voltage. Operating or steady state voltage is not permitted to vary significantly because the system is designed to operate at a set or fixed voltage.

In a conventional system, the engine is adjusted to maintain a substantially constant voltage to a power distribution bus. These conventional systems do not account for efficiency gains that could be achieved for the overall system efficiency by adjusting the engine without considering the voltage being supplied by the generator. Certain conventional systems adjust the engine speed based on a given load condition, but such an adjustment is based solely on the efficiency of the engine and not a combined efficiency including other components of the system.

Despite being classified as fixed bus voltage systems, these conventional systems may actually undergo large voltage swings when loads are applied or removed from the distribution bus. These potentially large voltage fluctuations require that the various electrical components on the system be designed and rated to tolerate a large range of voltages. Generally, the increased tolerance requirements lead to more robust (and more costly) components.

Also, many conventional systems require a battery back up system in order to provide another resource of power and to limit voltage transients. In some instances, voltage is allowed to sag (during load increases) in order to limit the power drag on the engine and to prevent engine stalling and/or the generator controls from failing.

### SUMMARY

According to one disclosed embodiment, a power generation system is disclosed. The system includes an engine and an electrical generator driven to rotate at rotational speed by the engine. The generator is configured to supply an adjustable amount of required electrical power having a voltage and a current to at least one electrical load. The system also includes a controller configured to adjust at least one operating parameter of the engine in order to maximize efficiency of the system. The system efficiency is a measure of the combined operation of generator and engine and load, wherein each of the generator, engine and load has different loss characteristics and wherein system efficiency is measure of combined efficiency for a given load condition. The controller is configured to maximize system efficiency based only upon the required electrical power being supplied by the generator. The controller is configured so that the controller does not independently consider any one of the rotational speed, the voltage or the current being supplied by the generator when adjusting the at least one operating parameter.

It is to be understood that both the foregoing general description and the following detailed description are exemplary and explanatory only and are not restrictive of the invention as claimed.

### BRIEF DESCRIPTION OF THE DRAWINGS

These and other features, aspects, and advantages will become apparent from the following description, appended claims, and the accompanying exemplary embodiments shown in the drawings, which are briefly described below. The application will become more fully understood from the following detailed description, taken in conjunction with the accompanying drawings.

Fig. 1 is a schematic of a control system and generator set coupled to an electrical load, according to an exemplary embodiment;

Fig. 2 is a schematic of a control system and generator sets coupled to a plurality of electrical loads, according to an exemplary embodiment;

Fig. 3 is a schematic of a control system and generator set with the electrical load including a motor and motor controller, according to an exemplary embodiment;

Fig. 4 is a schematic of a control system and generator set with an inverter electrically coupled to the generator set and load, according to an exemplary embodiment;

Fig. 5 is a schematic of a power generation system, according to an exemplary embodiment; and

Fig. 6 is a schematic of a power generation system, according to an exemplary embodiment.

Fig. 7 is a schematic of a power generation system for a marine vessel, according to an exemplary embodiment.

Fig. 8 is a schematic of a power generation system for a marine vessel, according to an exemplary embodiment.

### DETAILED DESCRIPTION

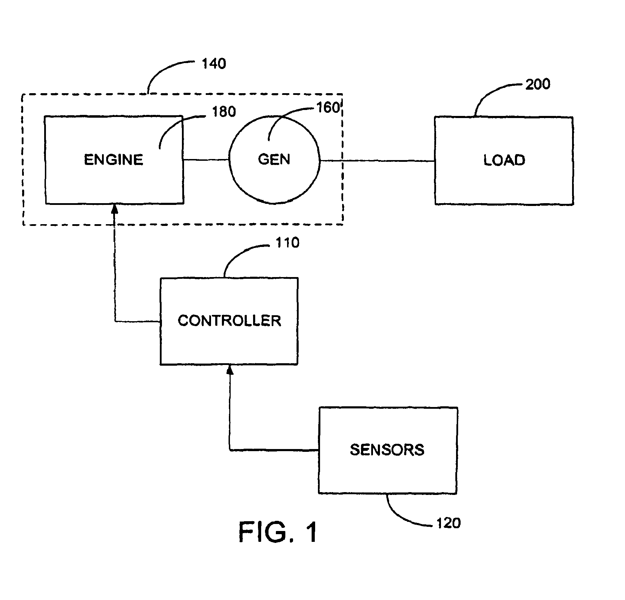

Referring to Fig. 1, a representative power generation system includes a generator set 14 that is configured to provide electrical power to a load 200 based on signals received from a controller 110 and one or more sensors 120. The generator set 140 may include an electrical generator 16 and an engine 18. According to one exemplary embodiment, the electrical generator 160 and engine 180 may be integrally mounted, while in another exemplary embodiment, the electrical generator 160 and engine 180 may be separate and only electrically coupled. The engine 180 (e.g., a diesel engine, a gasoline engine, etc.) typically provides mechanical power and motion to the electrical generator 160. According to one example, the engine 180 is a reciprocating internal combustion engine. The electrical generator 160 (e.g., a variable speed generator) is configured to convert the mechanical power from the engine 180 into electrical energy to power the load 200. According to various exemplary embodiments, this electrical power may be either direct current (DC) or alternating current (AC).

According to an exemplary embodiment, the generator 160 is configured to supply an adjustable amount of required electrical power having a voltage and a current to the electrical load 200. The controller 110 is configured to adjust at least one operating parameter of the engine 180 in order to maximize efficiency of the system. The system efficiency is a measure of the combined operation of generator 160, engine 180 and load 200. Each of the generator 160, engine 180 and load 200 has different loss characteristics and the system efficiency is measure of the combined efficiency for a given load condition. The controller 110 is configured to maximize system efficiency based only upon the required electrical power being supplied by the generator. The controller 110 is configured so that the controller does not independently consider any one of the rotational speed, the voltage or the current being supplied by the generator when adjusting the at least one operating parameter.

The load 200 may be any electrical load that provides impedance or resistance to the system. According to exemplary embodiments, the load 200 may be a motor, a lighting system, a battery, or any other electrically powered load.

The sensors 120 may be configured to sense one or more conditions related to the generator set 140 or the load 200 and to communicate the sensed condition to the controller 100. According to one exemplary embodiment, the sensors 120 may sense a voltage drop across the load 200. According to another exemplary embodiment, the sensors 120 may sense a load characteristic of the load 200, for example a load resistance or impedance, a power consumption, an efficiency metric, or any other metric or combination thereof related to the load 200. According to still another exemplary embodiment, the sensors 120 may sense the current flowing through the load 200. According to other exemplary embodiments, the sensors 120 may sense any characteristic related to the generator set 140 and/or the load 200. For example, the sensors 120 may be configured to sense the various operating conditions of the engine such as temperature, fuel level, exhaust conditions, speed, etc. There may be multiple sensors 120 provided in order to provide for sensing more than one of the aforementioned conditions simultaneously.

The controller 110 is configured to the control engine 180 of the generator set 140 based on inputs from the sensors 120. According to various exemplary embodiments, the controller 110 may control the engine speed, airflow, fuel flow, engine timing, or any other controllable function of the engine 180. For example, if the engine includes a turbocharger, the controller 110 may operate to adjust the position of the turbocharger in order to adjust the speed of the engine. For example, based on a voltage drop across the load 200, the controller 110 may increase the speed of the engine 180 to maintain relatively consistent power across the load 200. According to another exemplary embodiment, the controller 110 may control the engine 180 by referencing a set of stored values, for example in a look-up table. According to other exemplary embodiments, the controller 110 may control the engine 180 by a set of digital logic, analog circuitry, software programming, or any combination thereof.

As explained above, the controller 110 is configured to control the engine to maximize the efficiency of the overall system taking into account the combined efficiencies of the engine, generator and the load. According to another exemplary embodiment, the controller 110 may determine the combined system efficiency by referencing a set of stored values, for example in a look-up table. The stored values may be representative of each system component (e.g., loads, generator(s), engine(s)) According to other exemplary embodiments, the controller 110 may control the engine 180 by a set of digital logic, analog circuitry, software programming, or any combination thereof, wherein the logic, circuitry or programming is configured to calculate an appropriate adjustment to an engine parameter (e.g., throttle position, fuel input, air intake, turbocharger position, rpm, etc.) in order to maximize the efficiency of the system. The system efficiency may be weighted more heavily to one component of the system such as, for example, the load or generator depending on certain additional parameters such as, for example, the remaining operating life of the particular component.

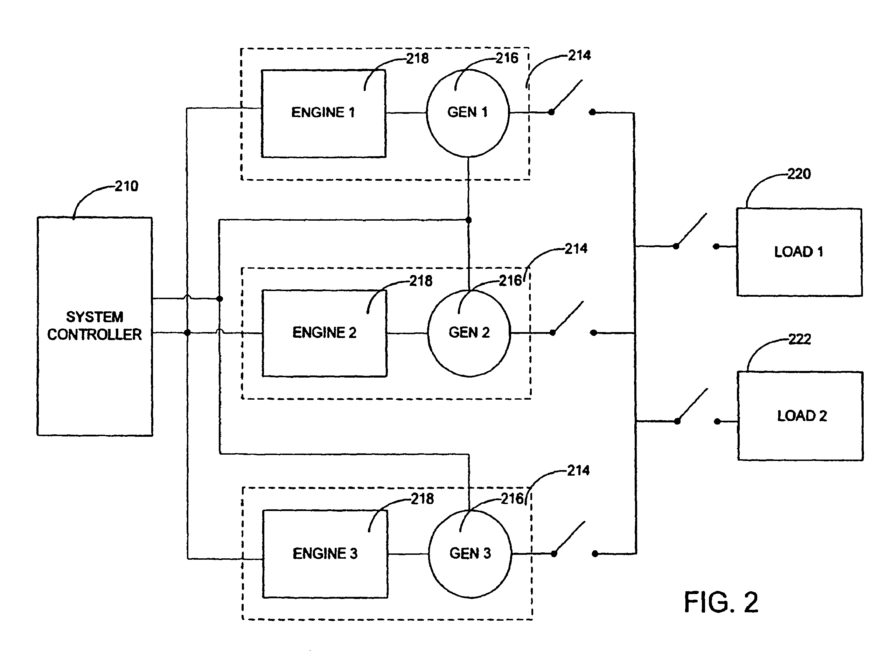

Fig. 2 discloses an alternative embodiment which includes multiple generator sets 214 coupled to multiple electrical loads 220, 222. The generator sets are controlled by a system controller 210. In this exemplary embodiment, an engine 218 and a generator 216 are coupled together to form the generator set 214, which supplies the first load 220 and second load 222. The first load 220 and/or the second load 220 may be a motor, an RC network, digital logic, or any other load capable of being electrically coupled to the generator sets 214.

According to some exemplary embodiments, the engines 218 may have variations in design, which may cause some engines 218 to operate more efficiently at one speed/load condition than another using system parameter fluctuations (e.g., load, speed, voltage, etc.). In other exemplary embodiments, the design of the engine 218 may result in relatively flat efficiency curve. For example, a system may have an efficiency of 61 % based on the generator 216 and the engine 218 interaction, therefore, for every 100 hp of installed power on the system, only 61 hp of output power would be achieved.

In another exemplary embodiment, the engine 218 may have a 98% efficiency factor and the generator 216 a 97% efficiency factor, yielding the generator set 214 with a 95% efficiency factor. In this exemplary embodiment, for every 100 hp of installed power on the system, 95 hp of output power would be achieved. Therefore, 95 hp would be available at the load. According to one exemplary embodiment, the system controller 210 may be configured to conserve energy by modifying the output of the generator set 214 and, thus, may improve the efficiency of other parts of the system. The electrical losses from the generator set 214 are relatively low, which allows the system to be more fuel efficient because the losses are less than the inherent limitations of a direct drive system. The system controller 210 efficiently utilizes the engine 212 and the load 220, 222 to gain system efficiencies that may offset the electrical conversion losses.

In an exemplary embodiments described above the components, including the system controller 110 and the generator set 140, may interact to achieve a high system efficiency and maintain that efficiency over a wide range of speeds and the loads. According to one example, the load 200 may be a direct-drive propulsion motor that does not incur significant loss (i.e. 3 to 5 percent loss typical of transmissions and gear reducers) and the electrical generator 160 may be a variable-speed generator that allows the speed and power output of the engine 180 to closely match the loads that are placed on the electrical generator 160.

In various exemplary embodiments, a ten percent fuel savings may be achieved by allowing the speed of the engine 180 to fluctuate with the loads, thereby reducing inefficiencies associated with intermittent high-speed, low-load operation. A ten percent fuel savings can be achieved by using a larger and more efficient load (e.g., a larger and more efficient propeller). Further, a thirteen percent savings may be achieved by more closely aligning the power required by the load 200 and the power produced by the engine 180 and, by doing so, shifting the load of the engine 180 to a more optimum point on its power curve over a wide range of speeds and conditions. Also, an additional savings of twenty percent may be achieved under some load conditions if multiple generators 160 are installed. These demonstrated fuel savings totaling 30 to 50 percent may be more than the losses introduced by the system.

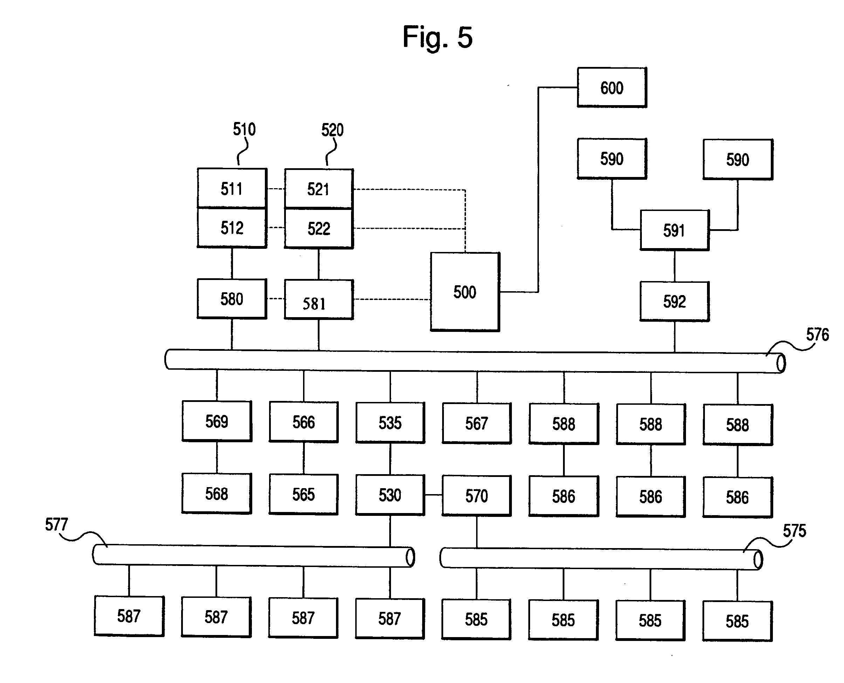

The operating characteristics of the controllers 110, 120 described above, apply fully to the controllers 500 described below during the operation of the systems described in Figs. 5-8.

Fig. 5 discloses another embodiment of a power generation system including a system controller 500 and a pair of generator sets 510, 520 for supplying electrical power to various loads. The system may include a power distribution system including, for example, an AC bus 575 and a DC bus 576. According to one embodiment, the AC bus is a 120 V AC bus that supplies typical AC loads 585 such as, for example, personal convenience items like television, stereo, microwave, hair dryer, appliances, etc. The DC Bus 576 may be a 240 V DC bus and may supply DC loads such as large appliances or the like such as stove, oven, water heater, etc. The various DC loads 586 may be protected by a protection circuit 588 and/or breaker system.

The DC bus loads may also include, for example, a marine propulsion motor 565 or motors (e.g., port and starboard motors). The propulsion motor 565 may be configured as a permanent magnet brushless DC motor. In one example, the motor 565 is rated for 35 HP at 1200 RPM. The propulsion motor may be connected to the DC bus 576 via a inverter 566, which may preferably be configured and referred to as a brushless DC motor controller. Other DC loads may include a variable speed DC motor 567 supplying for example an HVAC system. Other DC loads may include another permanent magnet brushless DC motor 568 connected to the DC bus 576 via an inverter 569. The inverter 569 may be a brushless DC motor controller.

The use of permanent magnet brushless DC motors as loads allows for improved overall system efficiency. These types of motors are more tolerant of voltage swings because voltage is conditioned by the motor/controller by adjusting the duty cycle of the commutation. As a result, the voltage standards and requirements of the system may vary more than conventional systems allowing for increased adjustment for improved efficiency.

The generator sets 510, 520 may be connected separately or in combination (via switches or breakers) to the AC bus. The example shown in Fig. 5, includes two generator sets, but the system may include one or more generator sets. Each generator set includes a prime mover or engine 511, 521 for driving the generator 512, 522. For example, the generator set may include a synchronous generator and a diesel engine.

In an alternative embodiment, two generators may be driving by a single engine. A common generator head may be mechanically coupled to the engine. The generator would include two sets of windings and two controllers; one for each generator. In one example, one generator would produce voltage in the range of 400 to 800 V DC for an approximately 600 V DC bus. This high voltage bus could supply larger loads such as, for example, a propulsion motor or hydraulic pumps. The second generator would produce voltage in the range of 150 to 300 V DC for a 240 V DC bus and would supply loads such as appliances, lights and a secondary AC bus.

The generator may be a permanent magnet generator including a rotor driven by the crankshaft of the corresponding diesel engine. The permanent magnets for generator excitation may be carried on the rotor, and the stator may be arranged within the rotor and carry the rotor windings for the generator. Alternatively, the stator windings may be arranged to surround the rotor. The generator may employ numerous thin laminations or relatively few thicker laminations.

The diesel engine is used for power generation and may be operated to control various engine parameters such as emissions and fuel efficiency. Also, the engine may be operated to maintain power overhead required to react to instantaneously applied load increases or step load requirements such as, for example, rapid increase in propulsion requirements. The present invention includes adjusting the engine speed so that the engine operates in the proper band of the associated power curve. Also, according to another embodiment a portion of the loading may be temporarily dropped or reduced to allow the engine speed to increase and respond to the overall increased demand.

Although the present application refers primarily to diesel engines, the engine may include, for example, any variable speed diesel or internal combustion engines, Stirling engines, gas turbines and micro-turbines.

The power generation system may include a passive or active rectification system(s) or circuit(s) 580, 581. The active rectification circuit 580 may be referred to as a active rectifier and, in one alternative embodiment, may be integrated into the generator. The active rectification circuit includes active elements such as power MOSFETs or other high end FETs. The FETs are switched on and off to rectify the generator output. In one example, the FETs are turned on and off in a manner corresponding to the frequency of the stator phases in order to achieve active synchronous rectification. Active rectification will allow the bus voltage to be independent of engine and generator speed. As a result, for example, at low engine speeds the bus voltage can be increased to reduce energy losses and increase power output. In other alternative embodiments, the active rectifier includes a suitable programmable circuit of active switch elements.

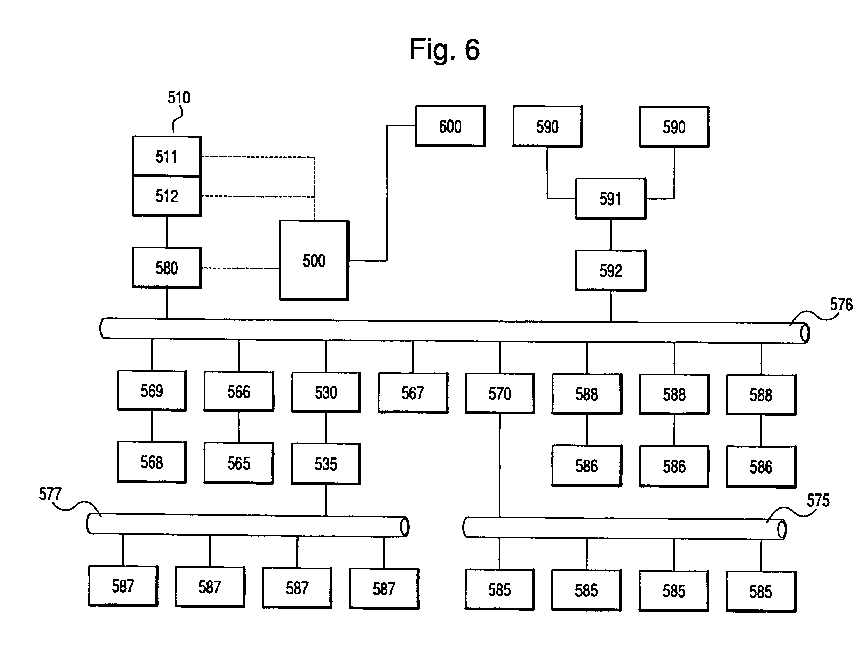

The power generation system may include a rectifier/inverter unit 570 for transferring power between the AC and DC busses (see Fig. 6, for example). When the diesel engines are not operation it may be necessary for the auxiliary battery 530 to supply power to the AC bus via the inverter unit 570. A battery charging unit 535 may also be provided. The auxiliary battery may also provide power to an auxiliary DC bus 577, typically low voltage (e.g., 12 V DC). The auxiliary DC bus 577 supplies power to low voltage DC loads 580 such as, for example, lighting, communication equipment, appliances, etc. Also, although not shown, the system may include a motor generator set for converting DC power into AC power or vice versa. Alternative sources of DC power may also be provided such as, for example, a flywheel generator, photovoltaic devices and fuel cells.

The battery 530 may be used to regulate load on the system an to optimize overall system efficiency. The controller 500 may adjust the batter charging device 535 to discharge or charge the battery 530 in order to add additional load or lighten the load on the generator(s) 512, 522 for overall system efficiency. The battery 530 may also be used as a storage device for storing electrical power.

The power generation system may also include alternative sources of power such as, for example, a flywheel generator or a micro-turbine generator. The alternative generator 590 may be placed on the AC bus 575 or, as shown in Fig. 5, on the DC Bus 576 via a transformer 591 and rectifier 592 system. One or more alternative generators 590 or power supplies may be provided. In a marine vessel example, the alternative power may be a shore based power supply.

The flywheel devices mentioned above, may be used to convert natural energy such as, for example, the force of water, to generate stored energy. The conversion of natural energy may be especially useful in a marine environment where back up utility power is unavailable.

Fig. 6 discloses an alternative power generation system including a single generator set 510. The system disclosed in Fig. 6 is similar in most respects to the system disclosed in Fig. 5. A battery 530 is provided to supply power to a low voltage DC bus 577 via a converter 535. Also, as mentioned above, a DC to AC inverter 570 is provided for converting the generated DC power on the DC bus 576 to the AC bus 575.

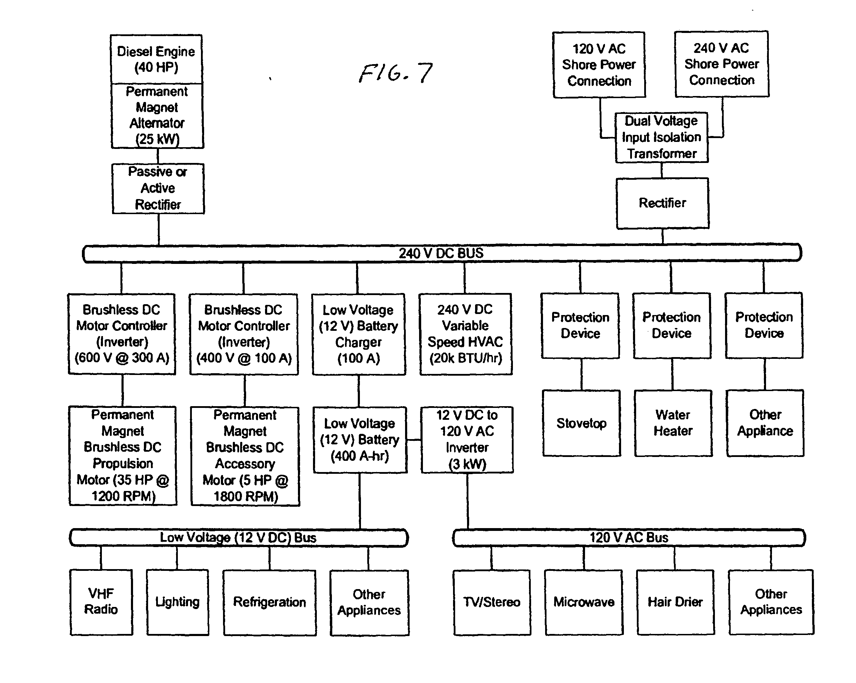

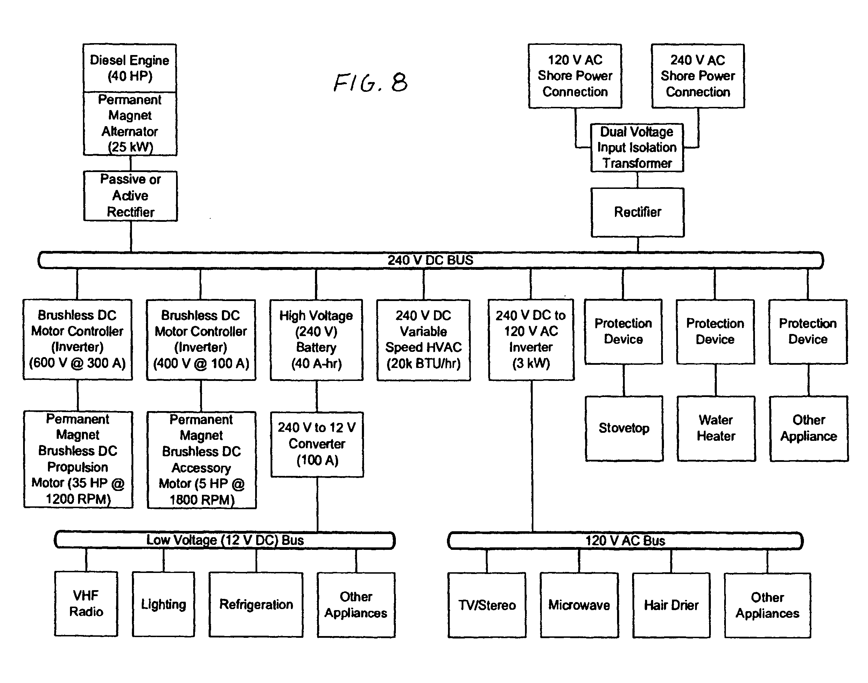

Figs. 7 and 8 disclose two examples of a power generation system for a marine vessel. The components of theses systems are labeled and include exemplary component ratings. Figs. 7 and 8 show exemplary systems that may be configured and operated in accordance with the features shown in described with regard to Figs. 1-6. The systems shown in Figs. 7 and 8 are exemplary only. The present application and claims are not limited to shipboard power systems or to power generation systems for a marine environment. The systems and concepts disclosed and claimed herein are applicable to engine driven power generation systems generally as disclosed and claimed herein.

The power generation system includes a system controller 500 to control the operation of the various components and devices in the power generation system. Although shown in the various figures of the application as a single controller 500, the system controller may be separated or integrated into one or many different microprocessor based controllers.

The system controller 500 may be configured to adjust at least one operating parameter of the engine in order to maximize efficiency of the system based only upon the required electrical power being supplied by the generator. For example, according to one embodiment the controller is configured to adjust engine speed in order maximize efficiency of the system. In another embodiment, the controller is configured to adjust the fuel input to the engine in order to maximize efficiency of the system.

Each engine 511, 521 may include a turbocharger and the controller 500 may be configured to adjust a position of the turbocharger in order to maximize efficiency of the system.

As discussed above with regard to Fig. 2, the controller 500 may be configured to receive inputs from various sensors when the load on the system is changing. For example, the controller may receive inputs on breaker or switch position or throttle position for a propulsion motor. Also, the controller can be configured to receive inputs from various voltage and current sensors so that the power being drawn by various loads may be detected. When the controller receives information that the amount or rate of load change is greater than a predetermined amount the speed of the engine could be adjusted. Alternatively, the controller can communicate and control the loads directly so that the amount or rate of the load change is limited in certain situations. For example, in the case of an electric motor the rate of change of motor speed could be limited by the system controller.

The controller 500 may be controller is configured to operate during power changes so that before the required electrical power changes to a new level the controller adjusts an operating parameter of the engine(s) 511, 521 in order to maximize efficiency of the system at the new power level. As described above, the controller 500 is configured to receive a signal providing information from the load regarding the required power level. In an alternative arrangement, the controller 500 may be configured to receive a signal providing information regarding the required power level from a user interface 600.

As mentioned, the system may include a power converter or rectifier 580 for conditioning the electrical power produced by the generator to supply the required electrical power. The power converter 580 is configured to adjust characteristics of the electrical power based on the required electrical power and wherein the controller 500 is further configured to maximize system efficiency based on an additional input received from the power converter.

In the two generator system shown in Fig. 5, the first generator set 510 may be configured to produce a voltage in the range of 540 to 660 volts (preferably around 600 V), and the second generator set may be configured to produce a voltage in the rage of 200 to 280 volts (preferably around 240 V). The two generator sets may supply high and low voltage power distribution busses, respectively.

The controller may be configured to adjust, for example, the follow operating parameters: generator RPM; generator voltage; and engine RPM. Also, for certain engine systems, the controller may adjust the injection timing, injection duration or number of injections; or the engine's turbo boost. The controller may also control the battery 530 to control the amount of electrical power being transferred to/or from the battery system in order to optimize the combined performance of the engine and generator. For example, bus voltages may be adjusted to control the rate of battery charge or discharge. The battery discharge may be adjusted to control the capacity of the engine. The alternative generator systems (e.g., the flywheel generator) may also be controlled to control the engine capacity.

The controller may also control the load sharing between two or more generators. The system may be configured to operate the generators at different conditions. For example, if three generators are provided, an operator's desire for maximum fuel efficiency may dictate operating the generators at 80, 20 and 0 percent capacity, respectively. Alternatively, for maximizing generator life each generator may be operated at 33 percent capacity. If an operator desires faster throttle response (e.g., when the system is supplying a propulsion motor and quick maneuverability is desired) each generator set may be operated in the power band at maximum power capacity.

The system controller may also operate in conjunction with the active rectifier 580 described above. The system controller may control the rectifier to make engine speed independent of the AC bus voltage. The system controller can control the rectifier circuit to set a system voltage without regard to the speed of the engine. Conventional systems only suggest the use of active rectification to stabilize the voltage output. The present application discloses employing active rectification to adjust and controller the voltage independent of generator speed. As a result, the system control can control the system to improve both the fuel efficiency of the engine and the electrical efficiency of the loads on the system. Some loads may operate more efficiently at a bus voltage different from the output voltage produced for a given fuel efficient engine speed.

As described above with regard to Fig. 2, the controller may be configured to operate in one of a number of selected configurations. For example, a system operate may select a "fuel efficiency" configuration or a "throttle response" configuration. Thus, the controller may automatically adjust the various system components and parameters (e.g., generator voltage) to optimize the performance of the generator, engine and system loads (e.g., a motor) in accordance with the operator selected configuration.

The system may include a standard user interface (e.g., keyboard, touch screen , etc.) 600 for inputting a load command (e.g., main engine(s) or propulsion motor(s) speed) and a desired system operating characteristic. The system controller may be configured to receive the speed command and desired operating characteristic from the user interface and to subsequently determine a required power to be supplied to the propulsion motor and an optimum generator RPM for satisfying the desired operating characteristic. The controller may be configured to control the engine to optimize certain engine parameters for the optimum RPM and power requirement; and wherein the controller adjusts the voltage of the power distribution system to minimize energy loses from the system. The system controller 500 may be configured as above, with regard to Figs. 2, to control the various components of the system. Also, software implementation of the above described features could be accomplished with standard programming techniques with rule-based logic and other logic to accomplish the various functions and processes of the controller(s).

According to an embodiment disclosed herein, a power generation system including an engine 511 and an electrical generator 521 driven to rotate at a rotational speed by the engine is provided. The generator 521 is configured to supply an adjustable amount of required electrical power having a voltage and a current to a propulsion motor 568. The controller 500 may be configured to adjust at least one operating parameter of the engine 511 in order to maximize efficiency of the system based only upon the required electrical power being supplied by the generator 521. The controller 500 does not independently consider any one of the rotational speed, the voltage or the current being supplied by the generator 521 when adjusting the at least one operating parameter.

The controller 500 may be configured to adjust engine speed and/or fuel input to the engine 511 in order maximize efficiency of the system. If the engine 511 includes a turbocharger the controller 500 may be configured to adjust a position of the turbocharger in order to maximize efficiency of the system. The controller 500 may be configured to operate during power changes so that before the required electrical power changes to a new level the controller 500 adjusts the at least one operating parameter in order to maximize efficiency of the system at the new power level. The controller 500 can receive a signal (e.g., from a sensor 120) providing information from the load regarding the required power level. Alternatively, the controller 500 may receive a signal providing information regarding the required power level from a user interface 600. The user interface 600 may be an engine speed controller or throttle adjustment mechanism.

The system may include a power converter (e.g., inverters/rectifiers 569, 570, 580) for conditioning the electrical power produced by the generator 521 to supply the required electrical power to at least one load (e.g., the propulsion motor 570). The power converter 569, 570, 580 adjusts characteristics of the electrical power based on the electrical power required by the at least one load. The controller 500 may be configured to maximize system efficiency based on an additional input received from the power converter 569, 570.

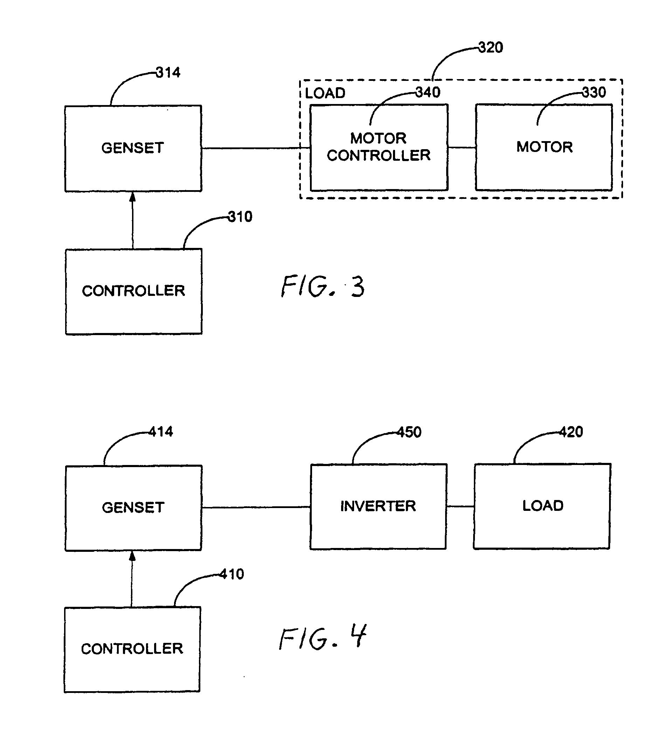

The system controller 500 may also be configured to control the various loads on the power generation system. Referring to Fig. 3, a generator set 314 is controlled by a controller 310 and supplies electrical power to a load 320, similar to the system of Fig. 1. In the illustrated exemplary embodiment, the load 320 includes a motor 330 and a motor controller 340.

The motor 330 is configured to convert electrical power received from the generator set 314 into mechanical power. According to various exemplary embodiments, the motor 330 may receive direct current (DC) or alternating current (AC) and may be any electrically powered motor of past, present, or future design.

The motor controller 340 is configured to monitor and adjust, if necessary, the current traveling to the motor 330. In one exemplary embodiment where the motor 330 is an AC motor, the motor controller 340 may clip the current to a predetermined maximum/minimum threshold value if the amplitude is too great for the motor 330 to handle. According to another exemplary embodiment where the motor 330 is an AC motor, the motor controller 340 may scale the AC sinusoid to an acceptable level (e.g., using an amplifier, resistor, etc. if the amplitude is too great for the motor 330 to handle. According to another exemplary embodiment where the motor 330 is a DC motor, the motor controller 340 may adjust the level of the direct current to a more optimal level. According to other exemplary embodiments, the motor controller 340 may control whether current reaches the motor 330 or not, effectively turning the motor 330 on or off. Operation of the motor controller may be dynamically controlled by the system controller 310 so that operation of both the generator and the load (e.g. motor) may be optimized.

Referring to Fig. 4, a generator set 414 is controlled by a controller 410 and supplies electrical power to a load 420, similar to the system in Fig. 1. The current is adjusted by an inverter 450. The load 420 is similar to the load 20 and may be a propeller, a drive wheel, a fan, a sound system, a lighting system, a bilge system, or any other electrically powered load.

The inverter 450 is configured to handle voltage fluctuations from the generator set 414 and convert DC power from the generator set 414 to AC power. According to one exemplary embodiment, the inverter 450 may be an active rectification circuit capable of adjusting the line voltage or the voltage across the load 420. In such an embodiment, the engine speed of the generator set 414 may be adjusted independently of the line voltage. For example, the speed of the engine may be increased while the line voltage remains constant. In another example, the engine speed may remain constant while the line voltage is lowered. Alternatively, both the engine speed and line voltage may be adjusted. According to another exemplary embodiment, the inverter 450 may include a passive rectification circuit. In other exemplary embodiments, the inverter 450 may be a non-rectifying circuit of any past, present, or future design.

It is noted that the circuitry of the exemplary embodiments of Figs. 3 and 4 may be used in the systems of Fig. 1, 2, 5, 6, 7 and 8 or any other generator set system. Any load 20, 220, 222) may include a motor and a motor controller or may be controlled by an inverter.

While the exemplary embodiments illustrated in the figures and described herein are presently preferred, it should be understood that these embodiments are offered by way of example only. Accordingly, the present application is not limited to a particular embodiment, but extends to various modifications that nevertheless fall within the scope of the appended claims. The order or sequence of any processes or method steps may be varied or re-sequenced according to alternative embodiments.

Although only a few embodiments of the present application have been described in detail in this disclosure, those skilled in the art who review this disclosure will readily appreciate that many modifications are possible (e.g., variations in sizes, dimensions, structures, shapes and proportions of the various elements, values of parameters, etc.) without materially departing from the novel teachings and advantages of the subject matter recited in the claims. Accordingly, all such modifications are intended to be included within the scope of the present application as defined in the appended claims.

It should be noted that although the diagrams herein may show a specific order of method steps, it is understood that the order of these steps may differ from what is depicted. Also two or more steps may be performed concurrently or with partial concurrence. Such variation will depend on the software and hardware systems chosen and on designer choice. It is understood that all such variations are within the scope of the application.

The foregoing description of embodiments of the application has been presented for purposes of illustration and description. It is not intended to be exhaustive or to limit the application to the precise form disclosed, and modifications and variations are possible in light of the above teachings, or may be acquired from practice of the application. The embodiments were chosen and described in order to explain the principles of the application and its practical application to enable one skilled in the art to utilize the application in various embodiments and with various modifications as are suited to the particular use contemplated.

Given the present disclosure, one versed in the art would appreciate that there may be other embodiments and modifications within the scope and spirit of the invention. Accordingly, all modifications attainable by one versed in the art from the present disclosure within the scope and spirit of the present invention are to be included as further embodiments. The scope of the present invention is to be defined as set forth in the following claims.

## Claims

1. A power generation system comprising:
an engine;
an electrical generator driven to rotate at a rotational speed by the engine;
wherein the generator is configured to supply an adjustable amount of required electrical power having a voltage and a current to at least one electrical load;
a controller configured to adjust at least one operating parameter of the engine in order to maximize efficiency of the system based only upon the required electrical power being supplied by the generator;
wherein the controller does not independently consider any one of the rotational speed, the voltage or the current being supplied by the generator when adjusting the at least one operating parameter.

2. The system of claim 1, wherein the generator and the engine are mechanically coupled together.

3. The system of claim 1, wherein the controller is configured to adjust engine speed in order maximize efficiency of the system.

4. The system of claim 1, wherein the controller is configured to adjust the fuel input to the engine in order to maximize efficiency of the system.

5. The system of claim 1, wherein the engine includes a turbocharger and the controller is configured to adjust a position of the turbocharger in order to maximize efficiency of the system.

6. The system of claim 1, wherein the controller is configured to operate during power changes so that before the required electrical power changes to a new level the controller adjusts the at least one operating parameter in order to maximize efficiency of the system at the new power level.

7. The system of claim 6, wherein the controller is configured to receive a signal providing information from the load regarding the required power level.

8. The system of claim 6, wherein the controller is configured to receive a signal providing information regarding the required power level from a user interface.

9. The system of claim 1, further comprising a power converter for conditioning the electrical power produced by the generator to supply the required electrical power to at least one load, wherein the power converter adjusts characteristics of the electrical power based on the electrical power required by the at least one load, and wherein the controller is further configured to maximize system efficiency based on an additional input received from the power converter.

10. The system of claim 9, wherein the power converter is configured to actively rectify the electrical output of the generator.

11. The system of claim 9, wherein the power converter is configured to passively rectify the electrical output of the generator.

12. The system of claim 10, further comprising an inverter for receiving the rectified output of the generator and supplying AC electrical power.

13. The system of claim 11, further comprising an inverter for receiving the rectified output of the generator and supplying AC electrical power.

14. The system of claim 1, wherein the at least one load comprises a brushless DC motor.

15. The system of claim 9, further comprising an electrical storage device, wherein the controller adjusts the system so that the storage device supplies power to the at least one load or draws power from the power converter as necessary to maximize the efficiency of the system.

16. A power generation system comprising:
an engine coupled to a first electrical generator driven to rotate at a rotational speed by the engine;
wherein the engine is coupled to a second electrical generator driven to rotate at a rotational speed by the engine, and wherein the first generator is configured to produce a higher voltage than the second generator and wherein each of the generators are configured to supply an adjustable amount of required electrical power having a voltage and a current to electrical loads;
a controller configured to adjust at least one operating parameter of the engine the engine in order to maximize efficiency of the system based only upon the required electrical power being supplied by the generators;
wherein the controller does not independently consider any one of the rotational speed, the voltage or the current being supplied by either of the generators when adjusting the at least one operating parameter.

17. The system of claim 16, wherein the first generator is configured to produce a voltage in the range of 540 to 660 volts.

18. The system of claim 17, wherein second generator is configured to produce a voltage in the range of 200 to 280 volts.

19. A power generation system comprising:
a first engine coupled to a first electrical generator driven to rotate at a rotational speed by the first engine;
a second engine coupled to a second electrical generator driven to rotate at a rotational speed by the engine;
wherein each of the generators is configured to supply an adjustable amount of required electrical power having a voltage and a current to at least one electrical load;
a controller configured to adjust at least one operating parameter of each of the engines in order to maximize efficiency of the system based only upon the required electrical power being supplied by the generator;
wherein the controller does not independently consider any one of the rotational speed, the voltage or the current being supplied by either of the generators when adjusting the at least one operating parameter.

20. The system of claim 19, wherein the first engine is coupled to a third electrical generator, and wherein the first and third electrical generators are configured to produce electrical power at different voltages.
